Europäisches Patentamt

European Patent Office

Office européen des brevets

(11) Publication number: **0 042 685**
**A1**

## (12) EUROPEAN PATENT APPLICATION

(21) Application number: **81302506.1**

(22) Date of filing: **05.06.81**

(51) Int. Cl.³: **G 10 K 10/00**
**G 10 K 11/02**

(30) Priority: **23.06.80 GB 8020501**

(43) Date of publication of application:
**30.12.81 Bulletin 81/52**

(84) Designated Contracting States:
**DE FR IT NL SE**

(71) Applicant: **SPACE AGE ELECTRONICS LIMITED**
**Spalding Hall Victoria Road**
**London(GB)**

(72) Inventor: **Gordon, Martin**
**6 Bradley Road Wood Green**
**London N22(GB)**

(72) Inventor: **Toubkin, Walter Milton**
**15 Fairholme Gardens**
**London N3(GB)**

(74) Representative: **Freed, Arthur Woolf et al,**
**MARKS & CLERK 57-60 Lincoln's Inn Fields**
**London WC2A 3LS(GB)**

(54) **Transducers.**

(57) A sonar transducer has a piezo-electric disc-shaped transducer element (16), one flat face of which rests on a surface within a housing (10). An acoustic impedance in the form of a layer (24) of epoxy resin engages the other flat face of the disc-shaped element (16) and provides a surface intended to contact the medium through which the sonar energy is to be transmitted. The transducer element (16) is energised at a frequency at which it is at resonance when loaded by the acoustic impedance (24) with the resonant frequency set by the diametral length of the disc-shaped element 16.

FIG.2.

EP 0 042 685 A1

## "TRANSDUCERS"

This invention relates to a transducer employing a piezo-electric transducer element.

It is known to provide a transducer having a piezo-electric transducer element in the form of a disc which is axially polarised and has electrodes on its faces. One way of using such an element in a transducer is to rest one face of the disc against a pad at the base of a recess while the other face of the disc is covered by a thin barrier. In use, on energisation at the appropriate frequency, the axial vibrations of the transducer element are transmitted through the barrier to a medium through which the vibrations are intended to pass. Assuming the medium is air, it is known to provide such transducers designed to operate at say 150 kHz. It is also known to place an acoustic impedance, which provides matching to the medium through which the ultrasonic energy is to be supplied, in contact with the other face of the disc and such an acoustic impedance could be in the form of a layer of epoxy resin. At the suggested frequency of 150 kHz, the layer of resin is relatively thin and its mass and general characteristics can be changed by moisture or other foreign matter to an undesirable extent and when its mass changes, its acoustic impedance changes which reduces the output of the transducer.

An ultrasonic transducer operating in air and producing vibrations at a frequency of 150 kHz is only effective over a relatively short range because of the attenuation of ultrasonic energy in air. However, disc-shaped piezo-electric transducer elements are normally designed to be operated at a resonant frequency of over 100 kHz and at such frequencies attenuation of the energy in air is inevitable within a short range. However, such transducer elements are advantageous in that they are cheap and are conventionally manufactured from lead zirconate or barium titanate.

The invention is concerned with a sonar transducer comprising a piezo-electric disc-shaped transducer element having electrodes, a housing having a surface on which one face of the disc-shaped element rests, an acoustic impedance in engagement with the other face of the disc-shaped element and providing a surface intended to contact the medium through which the sonar energy is to be transmitted, and means for energising the transducer element. According to this invention, the transducer element is energised at a frequency at which it is at resonance when loaded by the acoustic impedance with the resonant frequency set by the diametral length of the disc-shaped element.

With this arrangement, axial vibrations of the disc are transmitted through the acoustic impedance to the medium but the resonant frequency is set by the diametral length of the disc and is of course much lower than that when the resonant frequency is set by the axial thickness of the disc.

The thickness of the acoustic impedance required for matching purposes at a relatively low frequency is much thicker and in one example at which the resonant frequency of the transducer element when loaded is 30 kHz, the thickness of the acoustic impedance amounted to over 8 mm, the material of the acoustic impedance being epoxy resin. The thickness of the acoustic impedance is approximately one quarter of the wavelength of the acoustic energy through the acoustic impedance and is therefore set by the acoustic speed of transmission through the acoustic impedance. Such a thick acoustic impedance is little affected by moisture and the like.

A preferred transducer in accordance with this invention comprises a pad resting against the base of a cup-shaped body, against which pad the disc-shaped element rests, the cup-shaped body being filled with epoxy resin to provide the acoustic impedance. As is conventional, a tube extends away from the centre of the base of the cup-shaped body through which tube leads extend to the electrodes of the element. The electrodes are preferably formed, as is conventional, on the flat surfaces of the element.

Because a transducer in accordance with this invention employs a standard disc-shaped transducer element, it is relatively cheap to fabricate and because it operates at a frequency which is relatively low, for example, 30 kHz, it is effective in air at a relatively large distance e.g. over 10 metres.

A sonar transducer in accordance with this invention is not only suitable for transmission through air which has a relatively high impedance to acoustic energy but is also suitable for transmission through water or other liquid medium.

A sonar transducer in accordance with this invention will now be described, by way of example only, with reference to the accompanying drawings of which:-

Figure 1 is a block diagram of the transducer in accordance with the invention;

Figure 2 is a sectional elevation of the transducer head; and

Figure 3 is a plan view of the transducer head housing by itself.

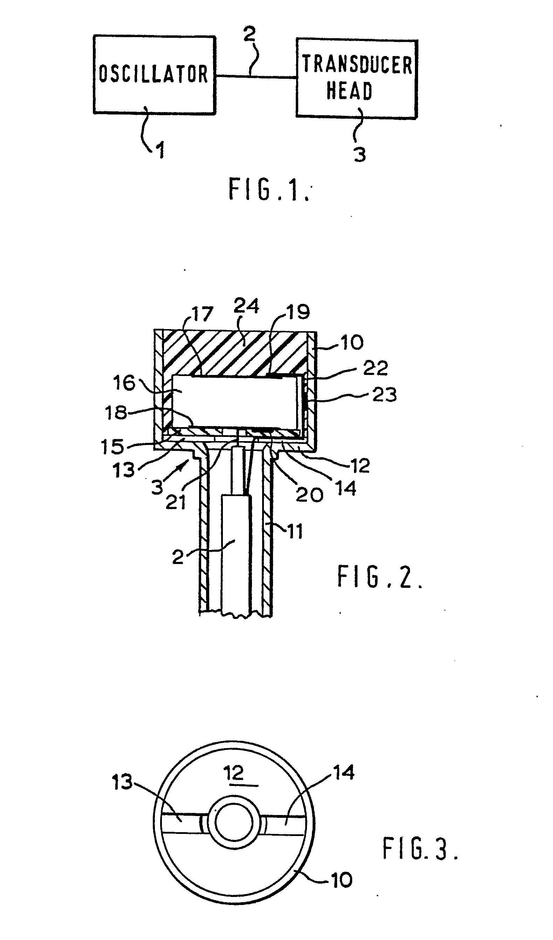

As shown in Figure 1 an oscillator 1 is coupled through a coaxial cable 2 to a transducer head 3. Referring to Figures 2 and 3, the transducer head 3 has a cup-shaped housing 10 having an externally threaded tube 11 extending away from a central aperture in its base 12. The inner surface of the base 12 has grooves 13 and 14 lying along a diametral of the base 12. A pad 15 rests against the inner surface of the base 12 and has resting against it a circular disc-shaped transducer element 16 which, in this example, is a transducer element manufactured by Vernitron Limited in PZT ceramic and has a diameter of approximately 31.75 mm and a thickness of approximately 14 mm. The pad 15 is in the form of a neoprene washer. The inner surface of the housing 12 is metallised.

The element 16 which is in the form of a piezo-electric crystal has electrodes (17 and 18) on its outer and inner flat surfaces respectively. The electrodes 17 and 18 are soldered at 19 and 20 respectively to the outer 21 and the inner 22 respectively of the coaxial cable 3 which extends through the tube 12. The inner 21 of the coaxial cable 2 extends through the central aperture of the pad 15 to the soldering point 20. The outer 22 of the coaxial cable 12 extends along the groove 14 between the base 12 and the pad 15, and through the space between the element 16 and the housing 12, to whose metallised inner surface it is soldered at 23, to the soldering point 19.

The cup-shaped housing 1 is filled above and around the element 15 with epoxy resin, the thickness of the layer 24 of epoxy resin above the disc-shaped element 16 being at least 10 mm. Layer 24 acts as an acoustic impedance and has a thickness equal to one quarter of the wavelength of the intended frequency of operation of the transducer.

The illustrated example is designed to operate at 30 kHz, which is one of the resonant frequencies of the transducer element when loaded by the acoustic impedance. Conventionally, the illustrated transducer element would be operated at approximately 150 kHz, for which purpose the thickness of the layer 24 of epoxy resin would have to be greatly reduced.

To achieve increased impedance matching by the acoustic impedance constituted by the layer 24 of epoxy resin, the acoustic impedance of the layer 24 may vary through its thickness by adding during moulding a suitable additive at a varying concentration to the epoxy resin.

The frequencies and dimensions given are exemplary and a transducer in accordance with this invention designed to operate at 20 kHz could readily be provided.

The oscillator 1 energises, at set intervals, the element 16 at a frequency at which the element is at resonance when loaded by the layer 24 with the resonant frequency set by the diametral length of the element 16 as opposed to its axial thickness.

Other piezo-electric crystal materials could be used, for example, lead zirconate and barium titanate.

The layer 24 could be of materials other than epoxy resin.

The front face of the layer 24 could be covered by a thin disc of stainless steel.

The inner surface of the element 16 could be bonded to a metal disc to lower the resonant frequency.

CLAIMS

1.    A sonar transducer comprising a piezo-electric disc-shaped transducer element (16) having electrodes (17, 18), a housing (12) having a surface on which one face of the disc-shaped element (16) rests, an acoustic ·impedance (24) in engagement with the other face of the disc-shaped element (16) and providing a surface intended to contact the medium through which the sonar energy is to be transmitted, and means (1) for energising the transducer element (16) characterised in that the transducer element (16) is energised at a frequency at which it is at resonance when loaded by the acoustic impedance with the resonant frequency set by the diametral length of the disc-shaped element (16).

2.    A transducer according to claim 1 characterised in that the acoustic impedance (24) is of resin.

3.    A transducer according to claim 2 characterised by a pad (15) resting against the base (12) of a cup-shaped body (10), against which pad (15) the disc-shaped element (16) rests, the cup-shaped body (10) being filled with epoxy resin to provide the acoustic impedance (24).

4.    A transducer according to claim 3 characterised in that a tube (11) extends away from the centre of the base (12) of the cup-shaped body (10) through which tube (11) connections extend to the electrodes (17, 18) of the element (16).

5.    A transducer according to any of claims 1 to 4 characterised in that the electrodes (17, 18) are formed on the flat faces of the disc-shaped element (16).

1-1

FIG.1.

FIG.2.

FIG.3.

# EUROPEAN SEARCH REPORT

**0042685**

Application number

EP 81 30 2506

## DOCUMENTS CONSIDERED TO BE RELEVANT

| Category | Citation of document with indication, where appropriate, of relevant passages | Relevant to claim |
|---|---|---|
| | CH – A – 430 290 (TECHNOCHEMISCHE A.G. MASCHINENFABRIK)<br><br>x column 3, line 10 to column 4, line 13; figures 3,4 x | 1,5 |
| | US – A – 4 030 175 (McSHANE)<br><br>x column 3, line 44 to column 4, line 64; figures 1,3,4 x | 1-5 |
| | US – A – 3 928 777 (F. MASSA)<br><br>x column 2, line 67 to column 4, line 21; figure 2 x | 1-5 |
| | GB – A – 2 029 091 (NATIONAL AERONAUTICS AND SPACE ADMINISTRATION)<br><br>x page 4, lines 7 to 30; figure 4 x | 1-5 |

### CLASSIFICATION OF THE APPLICATION (Int Cl.³)

G 10 K 10/00
11/02

### TECHNICAL FIELDS SEARCHED (Int. Cl.³)

G 10 K 10/00
11/02
B 06 B 1/06

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 23-09-1981 | STÜBNER |

EPO Form 1503.1 06.78